# EUROPÄISCHE PATENTSCHRIFT

(11) **EP 3 133 130 B1**
(45) Veröffentlichungstag und Bekanntmachung des Hinweises auf die Patenterteilung: **24.07.2019**
(21) Anmeldenummer: 15181389.6
(22) Anmeldetag: 18.08.2015
(51) Int. Cl.: C09D 167/00, C09D 163/00

(54) **PULVERLACKZUSAMMENSETZUNGEN**
POWDER COATING COMPOSITIONS
COMPOSITIONS DE LAQUE EN POUDRE

(43) Veröffentlichungstag der Anmeldung: 22.02.2017
(73) Patentinhaber: TIGER Coatings GmbH & Co. KG, 4600 Wels (AT)
(72) Erfinder: BRÜSTLE, Bernhard, 4871 Zipf (AT); SCHLAGER, Gerd, 4600 Wels (AT)
(74) Vertreter: Sonn & Partner Patentanwälte

(56) Entgegenhaltungen:
- WO-A1-91/14745
- WO-A1-2004/041904
- DE-A1-102006 057 837

## Beschreibung

Die vorliegende Erfindung betrifft Pulverlacksysteme, welche bei sehr niedrigen Einbrenntemperaturen ausgehärtet werden können und eine sehr gute Verformbarkeit aufweisen.

Die erfindungsgemäßen Pulverlacke enthalten (semi)kristalline Komponenten und können zur Beschichtung verschiedenster Substrate eingesetzt werden. Insbesondere hitzeempfindliche Substrate, wie Holzwerkstoffe, können bei niedrigen Einbrenntemperaturen und kurzen Einbrennzeiten beschichtet werden um glatte oder strukturierte Pulverlackoberflächen mit guten mechanischen Eigenschaften zu erzielen. Aufgrund der verbesserten Eigenschaften, insbesondere der verbesserten Flexibilität und Verformbarkeit, können diese Pulverlacke einschichtig auf Holzwerkstoffen eingesetzt werden, bei geringem Risiko von Rissbildung verursacht durch Dimensionsschwankungen des Substrates. Die Erfindung umfasst Niedertemperatur-Pulverlacke, sowohl mit glatten als auch mit strukturierten Oberflächen und mit verschiedenen Glanzgraden von stumpfmatt bis hochglänzend.

Für die Beschichtung von hitzeempfindlichen Substraten werden üblicherweise beschleunigte Epoxy/Polyester Pulverlacke (Hybridpulverlacke) eingesetzt. Diese zeichnen sich durch niedrige Einbrenntemperaturen und eine im Vergleich zu reinen Epoxidharz-Pulverlacken deutlich bessere UV Beständigkeit aus.

In der vorliegenden Beschreibung ist mit hochreaktiven Pulverlacken beziehungsweise mit niedrigen Einbrenntemperaturen (Niedertemperatur- oder Low-Cure-Pulverlacke) gemeint, dass die Pulverlacke für die Beschichtung hitzeempfindlicher Substrate wie z.B. LDF/MDF/HDF Holzfaserplatten oder von Spanplatten eingesetzt werden können. Die Härtungstemperaturen und Einbrennzeiten müssen so gering sein, dass keine wesentliche thermische Schädigung des Substrats und der Beschichtung auftritt. Als Stand der Technik werden Pulverlacke für hitzeempfindliche Substrate eingesetzt, welche innerhalb 3 min bis 5 min bei 135 °C bis 150 °C Substratoberflächentemperatur ausgehärtet werden können. Die in der vorliegenden Beschreibung geoffenbarten hochreaktiven Pulverlacke weisen bei diesen Einbrennbedingungen und gegebenenfalls auch bei noch niedrigeren Einbrennbedingungen von z.B. 2 min bis 5 min bei 130 °C bis 140 °C Substratoberflächentemperatur gute Eigenschaften auf, die für verschiedenste Anwendungen, wie etwa im Möbelbereich, erforderlich sind.

Die Lagerstabilität der Pulverlacke ist ein entscheidender Faktor für die Einsatzmöglichkeiten des Pulverlacks. Die Lagerstabilität wird im Rahmen der vorliegenden Beschreibung als ausreichend definiert, wenn nach zweiwöchiger Lagerung des Pulverlacks bei einer Umgebungstemperatur von 30 °C keine Verschlechterung der Beschichtungsqualität des Pulverlackes auftritt. Bevorzugt tritt keine Verschlechterung der Eigenschaften des ausgehärteten Pulverlackfilms nach einer Lagerung von 4 Wochen bei 30°C auf. Es wird davon ausgegangen dass die Pulverlacke bei niedrigeren Lagertemperaturen, wie etwa unter 20 °C, dann entsprechend lange lagerstabil sind, um für den industriellen Einsatz geeignet zu sein. Die Qualität der Pulverlacke wurde im Rahmen der Lagerstabilitätsprüfungen vor allem anhand von Gelzeitmessungen in Anlehnung an ÖNORM EN ISO 8130-6 beurteilt. Die Gelzeitmessungen wurden bei einer Temperatur des Heizblocks von 130 °C durchgeführt. Anders als in der Norm angegeben wurde die Zeitmessung sofort nach Überführen der Pulverlack-Probemenge in die Vertiefung im Heizblock gestartet und nicht erst nachdem das ganze Pulver geschmolzen ist. Traten bei Gelzeitmessungen vor und nach der Lagerung Unterschiede von mehr als 50 % in der Gelzeit auf, so wurde die Lagerstabilität als ungenügend interpretiert.

Für die Aushärtung des Pulverlacks muss dieser in einem Ofen aufgeschmolzen werden und anschließend thermisch vernetzen. Für die thermische Vernetzung müssen zumindest die zuvor spezifizierten Einbrennbedingungen eingehalten werden. Das mit Pulverlack beschichtete Substrat ist daher für eine definierte Zeit den Härtungstemperaturen bzw. Einbrenntemperaturen des Pulverlacks ausgesetzt. Für das Aufschmelzen und Aushärten können verschiedene Ofentechnologien eingesetzt werden, wie etwa Konvektionsöfen, Infrarotöfen oder Kombinationen davon. Infrarotöfen sind aufgrund der schnelleren Erwärmung der Substratoberfläche bevorzugt. Dadurch wird eine vollständige Erwärmung des Substarts vermieden und es treten weniger Probleme mit thermischer Schädigung oder Ausgasungen vom Substrat auf.

Beschleunigte Hybridpulverlacke weisen üblicherweise keine ausreichenden mechanischen Eigenschaften bzw. Flexibilität und Verformbarkeit auf, um einschichtig auf Holzwerkstoffen, wie LDF/MDF/HDF Holzfaserplatten oder Spanplatten, eingesetzt werden zu können. Aus diesem Grund wurden von verschiedenen Pulverlackherstellern Beschichtungssysteme entwickelt, die einen Zweischichtaufbau erfordern. Eine spezielle Pulverlackgrundierung (Primer) gewährleistet die mechanischen Eigenschaften und verhindert Rissbildung des Decklacks (Topcoat), welcher wiederum die geforderten Oberflächeneigenschaften gewährleistet.

Es besteht eine große Nachfrage nach Niedertemperaturpulverlacken, die nur einschichtig appliziert werden müssen und eine gute Rissbeständigkeit aufweisen, insbesondere seitens der Möbelindustrie und deren Zulieferern, wie z.B. MDF (Mitteldichte Faserplatte)-Pulverlackierer. Vorteile der einschichtigen Applikation sind vor allem in einem geringeren Anlageninvestment bzw. höheren möglichen Durchsatzraten bei gleicher Ofenkapazität und einer verminderten thermischen Beanspruchung des Substrats zu sehen. Ein weiterer Vorteil ist, dass eine größere Auswahl an temperatursensiblen Substraten eingesetzt werden können. Bei der Primer Beschichtung können Holzwerkstoffe, wie etwa mitteldichte Faserplatten (MDF) austrocknen, wodurch die Leitfähigkeit des Substrats reduziert wird und Probleme bei der elektrostatischen Applikation des Decklacks auftreten können. Aus diesem Grund werden für die Zweischicht-Applikation bevorzugt spezielle MDF Platten mit verbesserter Leitfähigkeit eingesetzt (z.B. der MDF Typ "MBP-L" der Firma Egger), welche allerdings einen höheren Preis aufweisen. Für Einschicht-Decklack Anwendungen ist es möglich, Standard MDF Platten einzusetzen, die kostengünstiger sind.

Neben den Einschicht-Decklacken sind vor allem Niedertemperaturpulverlacke gefragt, welche eine glatte Oberfläche aufweisen. Aufgrund der hohen Reaktivität ist es schwierig, mit Niedertemperaturpulverlacken glatte Beschichtungen zu erhalten, da für den Pulverlackverlauf und die Ausbildung einer glatten Oberfläche nur eine kurze Zeit nach dem Aufschmelzen zur Verfügung steht bevor die Härtungsreaktion einsetzt. Durch den Beginn der Vernetzung erhöht sich die Schmelzviskosität des Pulverlacks und es kann kein weiterer Verlauf mehr stattfinden. Daher weisen hochreaktive Pulverlacke meist eine sogenannte Orangenhaut-Oberfläche auf und werden bevorzugt als strukturierte Pulverlacke formuliert und eingesetzt. Die erfindungsgemäßen Pulverlackformulierungen ergeben eine deutlich glattere Oberfläche, da sie eine geringere Schmelzviskosität aufweisen. Dadurch sind ein besserer Verlauf in der Aufschmelzphase und glatte Formulierungen möglich.

Neben den genannten Anforderungen ist auch eine verbesserte UV Beständigkeit gegenüber Standard Epoxid/Polyester Hybridpulverlacken gefragt, welche aufgrund des enthaltenen Epoxidharzes in der Lichtechtheit stark limitiert sind. Bei diesen Pulverlacken kann nach mehreren Jahren Einsatz im Innenbereich eine Vergilbung auftreten. Durch Zugabe von Lichtstabilisatoren und Antioxidantien kann diese Vergilbung nicht verhindert werden und die Lichtechtheit kann dadurch nicht verbessert werden. In einer spezifisch adaptierten Ausführungsform der erfindungsgemäßen Pulverlacke kann hier eine deutliche Verbesserung zum Stand der Technik erreicht werden.

Es wurden Dokumente veröffentlicht, in welchen Pulverlackformulierungen beschrieben sind, die eine Kombination von amorphen Polyesterharzen und (semi)kristallinen Polyesterharzen einsetzen und welche Carboxylgruppen aufweisen. Es wurden verschiedene Härter für die Vernetzung dieser Polyesterharze eingesetzt, wie epoxidfunktionelle Härter und Harze (z.B. Araldite PT910, BPA basierende Epoxidharze, GMA Acrylatharze,...) oder beta-Hydroxyalkylamid Verbindungen (z.B. Primid). Der Vorteil von Acrylatharzen gegenüber BPA basierenden Epoxidharzen liegt in einer besseren UV Beständigkeit, wodurch ein Einsatz im Außenbereich möglich ist. Für hochreaktive Pulverlacke können epoxidfunktionelle Acrylatharze allerdings nicht eingesetzt werden, da diese eine zu geringe Reaktivität aufweisen.

Die Pulverbeschichtung von Holzwerkstoffen, wie MDF, setzt sehr hohe Anforderungen an den Beschichtungsprozess. Unter anderem muss die Oberflächentemperatur auf allen Flächen und Kanten des dreidimensionalen Substrats sehr gut kontrolliert werden. Die Aushärtung muss an allen Kanten ausreichend sein, um die Pulverlackeigenschaften zu gewährleisten. Andererseits sollte die thermische Belastung so gering wie möglich gehalten werden um Schädigungen und Ausgasungen vom Substrat zu vermeiden oder gering zu halten. Aus diesem Grund werden die Niedertemperaturpulverlacke üblicherweise nur am unteren Limit des Einbrennfensters vernetzt, wodurch hohe Anforderungen an die Ofentechnologie und die Ofeneinstellungen gestellt sind, um die Temperaturen in einem sehr engen Bereich zu halten. Es wäre von großem Vorteil, wenn dieses Prozessfenster vergrößert werden könnte, ohne dass dadurch Qualitätsprobleme verursacht werden. Überraschenderweise hat sich gezeigt, dass die in vorliegenden Beschreibung geoffenbarten Pulverlacke robuster sind und bei geringfügiger Untervernetzung keinen so starken Abfall der mechanischen Eigenschaften (z.B. keine Riss-Bildung bei Verformung bzw. bei Prüfung in Anlehnung an IOS-TM-0022) aufweisen, wie bisher bekannte Niedertemperaturpulverlacke auf Basis eines sogenannten Hybrids aus Polyester- und Epoxidharz. Beschleunigte Hybridpulverlacke nach dem Stand der Technik weisen einen starken Abfall in den mechanischen Eigenschaften auf, wenn sie nicht vollständige ausgehärtet sind.

Beschichtete Holzwerkstoffe finden häufig Anwendung im Möbelbereich, wobei neben strukturierten Oberflächen vor allem glatte Oberflächen mit niedrigen Glanzgraden gefordert sind. Die glatten Oberflächen weisen meist einen Glanzgrad von weniger als 60 Glanzeinheiten (bei Messwinkel 60°) auf, bevorzugt von weniger als 50 Glanzeinheiten (bei Messwinkel 60°). Für die Herstellung lackierter Möbelteile werden großteils Nasslacke eingesetzt, da diese eine ausreichend glatte Oberfläche erzeugen können und auch niedrige Glanzgrade liefern. Die Anforderungen an den Pulverlack sind somit neben einer möglichst glatten Oberfläche auch ein möglichst niedriger Glanzgrad. Für Niedertemperaturpulverlacke sind allerdings keine Mattierungsmethoden bekannt, die bei den genannten niedrigen Einbrenntemperaturen von weniger als 150 °C niedrige Glanzgrade von unter 50 Glanzeinheiten (bei 60° Messwinkel) ermöglichen. Durch Zugabe hoher Mengen an Mattierungswachsen können Glanzgrade von unter 50 Glanzeinheiten (bei Messwinkel 60°) erzeugt werden. Jedoch liefert diese Methode keine stabile Mattierung, da die Oberflächen aufpoliert werden können, wodurch sich der Glanzgrad auf über 50 Glanzeinheiten (bei Messwinkel 60°) erhöhen kann.

Seit mehr als zehn Jahren wird versucht, Niedertemperaturpulverlacke zu entwickeln, welche die oben genannten Anforderungen erfüllen. In der vorliegenden Beschreibung werden Pulverlackformulierungen geoffenbart, welche auf Basis einer sehr spezifischen Zusammensetzung überraschenderweise hochreaktiv und zugleich lagerstabil sind, als Einschichtpulverlack für hitzeempfindliche Substrate geeignet sind und auch glatte Oberflächen ermöglichen. Außerdem werden Formulierungen beschrieben, die eine verbesserte Lichtechtheit aufweisen. Der dadurch erfindungsgemäß herstellbare Pulverlack ermöglicht somit ein Anwendungsspektrum, welches für bisherige Hybridpulverlacke auf Basis von Polyester- und Epoxidharz nach dem Stand der Technik nicht gegeben war.

Die WO 2004/041904 A1 beschreibt eine Pulverlackzusammensetzung, welche amorphe Polyesterharze und semi-kristalline Polyesterharze beinhaltet, zusammen mit "Polyphenoxy"-Harzen welche ein Epoxidequivalenzgewicht EEW von 150 bis 1500 g/eq aufweisen. Als "Polyphenoxy" Harze werden Bisphenol-A basierende Epoxidharze und Phenol- oder Kresol-Epoxid-Novolake angegeben. In diesem Dokument sind keine hochreaktiven Pulverlacke beschrieben. Die angegebenen Bereiche für die Säurezahl des amorphen Polyesters und für das EEW der "Polyphenoxy" Komponente sind für hochreaktive Pulverlacke nicht geeignet. Es werden keine Lösungen für die Beschleunigung von Niedertemperaturpulverlacken zur Erreichung der für die Beschichtung von hitzeempfindlichen Substraten notwendigen Einbrennbedingungen geoffenbart, unter Berücksichtigung einer ausreichenden Lagerstabilität des Pulverlacks. Bei den angegebenen hohen Mengen an semi-kristallinem Polyester von bis zu 50 Gewichtprozent des Bindemittels sind die Pulverlacke nicht mehr ausreichend lagerstabil entsprechend der in der vorliegenden Beschreibung angegebenen Definition.

Die DE 102006057837 A1 beschreibt eine Pulverlackzusammensetzung, welche sowohl (semi)kristallinen Polyester als auch amorphen Polyester beinhaltet und welche mittels eines Epoxidgruppen und/oder Hydroxyalkyamidgruppen enthaltenden Härters vernetzt werden. In diesem Dokument sind keine hochreaktiven Pulverlacke beschrieben. Die angegebenen semikristallinen Polyester sind OH-funktionelle Polyester, welche für Polyurethanpulverlacke eingesetzt werden.

Die US 6 184 311 B1 beschreibt eine Bindemittelzusammensetzung eines semi-kristallinen und eines amorphen Polyesterharzes, welche Carboxylgruppen aufweisen die mit Epoxidharzen oder anderen reaktiven Gruppen gehärtet werden können. Die beschriebenen Hybridpulverlacke sind aber keine hochreaktiven Pulverlacke. Die angegebenen Bereiche für Säurezahl des amorphen Polyesters, EEW des Epoxidharzes sowie Typ und Menge des Katalysators lassen keinen Rückschluss auf einen hochreaktiven Pulverlack zu. Bei den angegebenen hohen Mengen an semi-kristallinem Polyester von bis zu 90 Gewichtprozent der Polyesterharze, sind die Pulverlacke nicht mehr ausreichend lagerstabil entsprechend der in der vorliegenden Beschreibung angegebenen Definition.

Die US 6 660 398 B1 beschreibt wiederum die Kombination von semikristallinen Polyesterharzen mit amorphen Polyesterharzen. Der beanspruchte semikristalline Polyester besteht unter anderem aus 1,12-Dodecandisäure und hat laut Beschreibung eine bevorzugte Säurezahl von weniger als 30 mg KOH/g. Bei dem Pulverlack handelt es sich um keinen Hybridpulverlack und um keinen Niedertemperaturpulverlack. Als Härter werden Glycidylester wie TGIC und Araldite PT 910 sowie Hydroxyalkylamide wie Primid XL-552 angegeben.

Im Rahmen der vorliegenden Erfindung wurde überraschenderweise festgestellt, dass hochreaktive Hybridpulverlacke basierend auf Epoxid- und Polyesterharzen durch Zugabe von - in einer bevorzugten Ausführungsform sehr speziellen - (semi)kristallinen Harzen hergestellt werden können, die sehr gute mechanische Eigenschaften und Verformbarkeit aufweisen. Dadurch wird der Einsatz von Niedertemperaturpulverlacken für die einschichtige Beschichtung von Holzwerkstoffen ermöglicht. Außerdem ermöglicht die Zugabe der (semi)kristallinen Harze eine Herabsetzung der Schmelzviskosität, wodurch glattere Oberflächen für hochreaktive Pulverlacke erzielt werden können.

Die vorliegende Erfindung betrifft eine Pulverlackformulierung, die eine spezielle Bindemittelkombination beinhaltet, welche durch spezielle Katalysatoren beschleunigt wird um einen hochreaktiven Pulverlack zu erhalten. Das Bindemittel setzt sich aus zumindest drei Komponenten zusammen, einem amorphen Polyesterharz, einem (semi)kristallinen Polyesterharz und einem Epoxidharz. Die Polyesterharze weisen Carboxylgruppen auf, welche mit den Epoxidgruppen beim Einbrennvorgang reagieren, was einen chemisch vernetzten Pulverlackfilm zur Folge hat.

Der erfindungsgemäße Pulverlack enthält somit eine Bindemittelkombination, umfassend die folgenden Komponenten:
A) 20 bis 70 Gew.-% der Bindemittel von einem oder mehreren amorphen, Carboxylgruppen enthaltenden Polyesterharzen, mit einer arithmetisch gemittelten Säurezahl von 50 bis 100 mg KOH/g *,
B) 20 bis 50 Gew.-% der Bindemittel von einem oder mehreren Epoxidgruppen enthaltenden Polymeren mit einem arithmetisch gemittelten Epoxid-Äquivalenzgewicht von 350 bis 650 g/eq, vorzugsweise von 400 bis 650 g/eq,
C) 5 bis 30 Gew.-% der Bindemittel von einem oder mehreren kristallinen oder semikristallinen, Carboxylgruppen enthaltenden Polyesterharzen, mit einer arithmetisch gemittelten Säurezahl von 15 bis 80 mg KOH/g,
D) 0,5 bis 4 Gew.% (auf die Gesamtformulierung) von einem oder mehreren Katalysatoren (Beschleunigern) für die Vernetzungsreaktion(en) und gegebenenfalls
E) 0 bis 10 Gew.% (auf die Gesamtformulierung) von einem oder mehreren Komponenten mit reaktiven Gruppen für eine (zusätzliche) Vernetzungsreaktion mit den Carboxylgruppen und/oder Epoxidgruppen der Komponenten A), B) und C),
wobei die Schmelzviskosität des Pulverlacks gemessen mittel Platte-Platte-Messgeometrie bei einer Aufheizrate von 5°C/min ein Minimum im Bereich 300 - 2000 Pa*s aufweist.
*Die gemittelte Säurezahl berechnet sich aus den Säurezahlen der einzelnen Komponenten und deren Anteil, z.B. Komponente A) besteht aus 80 % Polyester mit Säurezahl von 80 mg KOH/g und 20% Polyester mit Säurezahl von 40 mg KOH/g. Die gemittelte Säurezahl von Komponente A) ist somit (0,8 ^{∗}80)+(0,2^{∗}40)=64+8=72

Es wurde festgestellt, dass durch Zugabe eines speziellen (semi)kristallinen Polyesterharzes mit einer gemittelten Säurezahl von 15 bis 80 mg KOH/g ein Hybrid-Pulverlack erhalten wird, welcher eine sehr gute Verformbarkeit aufweist. Es hat sich gleichzeitig gezeigt, dass durch die Zugabe dieser (semi)kristallinen Komponente die Reaktivität des Pulverlackes herabgesetzt wird, wodurch dieser nicht mehr ausreichend reaktiv ist für die Beschichtung temperatursensibler Substrate wie etwa MDF Holzfaserplatten. Überraschenderweise wurde nun gefunden, dass bei Kombination der kristallinen Polyestern mit sehr spezifischen Epoxidharzen mit einem engen Bereich für das Epoxidäquivalenzgewicht (EEW) von 350 bis 650 g/eq, vorzugsweise von 400 bis 650 g/eq, mit amorphen Polyesterharzen, die eine relativ hohe Säurezahl von 50 bis 100 mg KOH/g aufweisen, und mit speziellen Katalysatoren, die Reaktivität auf ein so hohes Niveau gehoben werden konnte, dass die Pulverlacke nach 3 min bis 5 min bei 135 °C bis 150 °C (Substratoberflächentemperatur) und darüber ausgehärtet werden konnten.

Vorzugsweise liegt das stöchiometrische Verhältnis der Carboxylgruppen von den Komponenten A) und C) zu den Epoxidgruppen von Komponente C) im Bereich von 0,3 bis 1,5, bevorzugt im Bereich von 0,8 bis 1,2 und besonders bevorzugt im Bereich von 0,9 bis 1,1. Wenn eine zusätzliche Komponente E eingesetzt wird, muss diese bei dem stöchiometrischen Verhältnis eingerechnet werden (zum Beispiel stehen bei Zugabe eines Polyamins, je nach Amin-Zahl, weniger Epoxidgruppen für die Reaktion mit den Carboxylgruppen zur Verfügung da diese auch mit den Amin-Gruppen reagieren). Während ein Übergewicht an Carboxylgruppen bei herkömmlichen Pulverlackformulierungen des Standes der Technik wenig Sinn macht, da diese nicht vernetzt werden, ist ein Epoxid-Übergewicht erfindungsgemäß günstig, da die Epoxidgruppen ja auch durch Homopolymerisation vernetzen können.

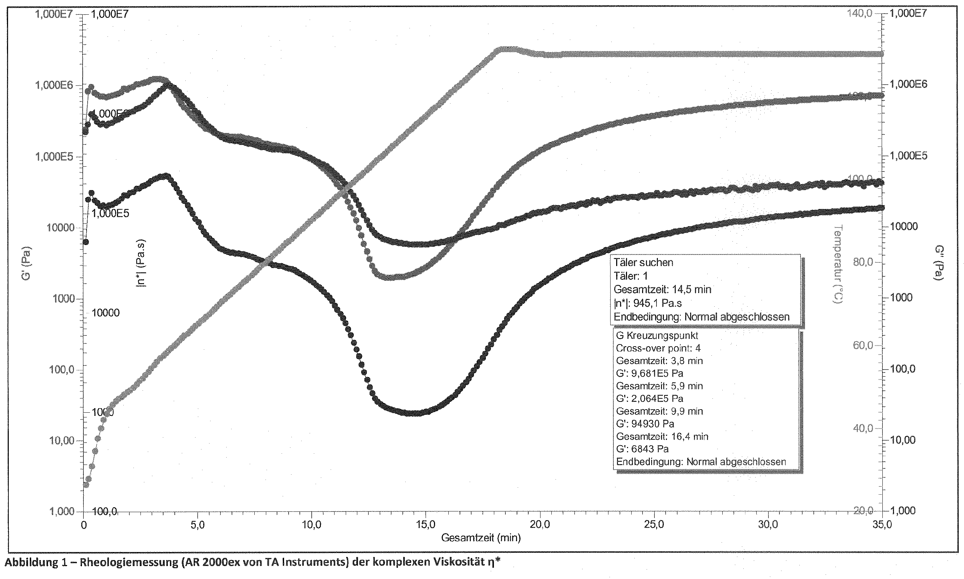

Es wurde somit erfindungsgemäß ein Pulverlack erhalten, der hochreaktiv ist, eine hohe Verformbarkeit aufweist und aufgrund der Vernetzungsdichte eine widerstandsfähige Lackoberfläche gewährleistet. Durch die Zugabe der (semi)kristallinen Komponente ist es möglich, Niedertemperaturpulverlacke herzustellen, die im Vergleich zu normalen Niedertemperaturpulverlacken eine deutlich glattere Oberfläche aufweisen. Durch die (semi)kristalline Komponente wird die Schmelzviskosität stark herabgesetzt, wodurch der Pulverlack beim Aufschmelzen besser verlaufen kann und ein für hochreaktive Pulverlacke typischer Orangenhauteffekt vermindert wird. Die Schmelzviskosität des Pulverlacks kann mittels eines Rheometers, wie dem "AR 2000ex" von TA Instruments Ltd., bei einer bestimmten Aufheizrate gemessen werden. Bei diesen rheologischen Messungen kann anhand des Speichermoduls G' und des Verlustmoduls G" die komplexe Viskosität η* ermittelt werden. Anhand des Minimums der komplexen Viskosität kann die Schmelzviskosität des Pulverlacks beurteilt werden (Abbildung 1). Es hat sich gezeigt dass für möglichst glatte Pulverlackoberflächen das Minimum der komplexen Viskosität bei Messung mittels Platte-Platte-Messgeometrie bei einer Aufheizrate von 5 °C/min im Bereich von 300 bis 2000 Pa*s liegen sollte, bevorzugt im Bereich 300 bis 1500 Pa*s.

Bei hohem Anteil an (semi)kristallinen Harzen in der Formulierung können typischerweise Probleme in der Lagerstabilität des Pulverlackes auftreten. Durch die (semi)kristallinen Harze wird die Glasübergangstemperatur des Pulverlackes herabgesetzt, wodurch Probleme beim Pulverlackherstellprozess, bei der Lagerung und Transport sowie bei der Anwendung beim Beschichter auftreten können. Überraschenderweise zeigte die beanspruchte Pulverlackzusammensetzung eine nach dem in der vorliegenden Beschreibung angegebenen Parametern als ausreichend definierte Lagerstabilität. Die Lagerstabilität kann zusätzlich durch Zugabe von Antiblocking-Additiven wie zum Beispiel Amidwachsen (zum Beispiel Ceraflour 3910 oder Ceraflour 6721) verbessert werden.

Einen anderer Aspekt der Lagerstabilität sind chemische Vorreaktionen (Vernetzungsreaktionen), die bei stark beschleunigten Hybridpulverlacken bereits bei Raumtemperatur auftreten können. Für die erfindungsgemäß vorgesehenen Pulverlackformulierungen wurde darüber hinaus festgestellt, dass beim Einsatz spezieller Katalysatoren, welche ausreichend reaktiv sind, die Lagerstabilität des Pulverlacks jedenfalls gewährleistet wird.

Eine weitere Verbesserung der Lagerstabilität kann durch temporäres Lagern des fertigen Pulverlackes oder des Pulverlackgranulats (Extrudat welches noch nicht vermahlen wurde) bei einer bestimmten Temperatur (Tempern) erreicht werden. Die Lagerungstemperatur liegt dabei im Bereich von 25 bis 60 °C, bevorzugt im Bereich 30 bis 45 °C. Die Lagerungsdauer ist abhängig von der Lagerungstemperatur und liegt im Bereich von wenigen Minuten bei hoher Temperatur bis zu mehreren Tagen bei niedrigen Temperaturen. Ohne an eine Theorie gebunden zu sein wird vermutet, dass durch diese Lagerung (Tempern) die Rekristallisation von Komponente C), welche bei der Extrusion zumindest teilweise aufgeschmolzen wird, beschleunigt wird, wodurch die Lagerstabilität weiter verbessert wird.

Die beanspruchten Pulverlacke werden bevorzugt als Einkomponenten-Pulverlacke nach dem Standard-Pulverlackherstellprozess hergestellt. Es ist allerdings auch möglich mit den beanspruchten Formulierungen einen Zweikomponenten-Pulverlack herzustellen. Bei dem Zweikomponenten-Pulverlack kann die Zusammensetzung der einzelnen Komponenten variieren. Es können verschiedene Zusammensetzungen an Bindemitteln (Harzen), Katalysatoren, Härtern, Additiven und Füllstoffen in den einzelnen Komponenten eingesetzt werden.

### Komponente A:

Die erfindungsgemäß eingesetzten Carboxylgruppenhaltigen amorphen Polyester (Komponente A) haben eine Säurezahl von 50 bis 100 mg KOH/g, bevorzugt einen Tg von 35 bis 80 °C und einen Schmelzbereich von 60 bis 130 °C. Die Molmassen betragen bevorzugt 2000 bis 10000.

Wenn sich Komponente A) aus mehreren unterschiedlichen amorphen Polyestern zusammensetzt, so muss wie weiter oben angegeben das arithmetische Mittel der amorphen Polyester eine Säurezahl von 50 bis 100 mg KOH/g ergeben.

Die eingesetzten Carboxylgruppen enthaltenden Polyester können durch Polykondensation geeigneter Di- und/oder Polycarbonsäuren, -estern und/oder Anhydriden und Di- und/oder Polyolen hergestellt werden. Wie unter WO2004041904 angegeben bestehen die Polycarbonsäuren bevorzugt zu 50 bis 100 Mol% aus Terephthalsäure oder Isophthalsäure oder Mischungen davon und zu 50 bis 0 Mol% aus anderen aliphatische, cycloaliphatischen oder aromatischen Polycarbonsäuren. Bezogen auf die Polyol Bestandteile bestehen die amorphen Polyester bevorzugt aus 40 bis 100 Mol% Neopentylglykol und 60 bis 0 Mol% von anderen aliphatischen oder cycloaliphatischen Polyolen. Es können auch verzweigte amorphe Polyester eingesetzt werden welche durch entsprechende Polycarbonsäuren und/oder Polyole hergestellt werden können. Beispiele für Polycarbonsäuren sowie von Polyolen finden sich unter EP1426423. Beispiele für Polycarbonsäuren sind somit Terephthal-, Isophthal-, Trimellit-, Pyromellit-, Tetrahydrophthal-, Hexahydrophthal-, Hexahydroterephthal-, Bernstein-, Adipin-, Kork-, Azelain-, Sebacin-, Phthal-, Glutar-, Di- und Tetrachlorphthal-, Endomethylentetrahydrophthal-, 1,4-Cyclohexandicarbonsäure beziehungsweise soweit zugänglich deren Ester oder Anhydride. Beispiele für Polyole sind wie unter EP1426423 angegeben Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester. Bevorzugt werden bevorzugt Monoethylen-glykol, Neopentylglykol, Dicidol, Cyclohexandimethanol, Trimethylolpropan und Glycerin eingesetzt. Diese Beispiele für geeignete Carbonsäuren und Polyole finden sich auch in der US 20040236037 A1.

Amorphe Polyesterharze sind häufig eingesetzte Komponenten im Pulverlackbereich und sind unter anderem unter den Handelsnamen Crylcoat (z.B. Crylcoat E 04187, Crylcoat E 38051, Crylcoat 1620-0, Crylcoat 1557-5, Crylcoat 1572-0, Crylcoat 1660-0, Crylcoat 1506-6, Crylcoat 1551-2, Crylcoat 1553-9), Uralac (z.B. Uralac P 5267, Uralac P 5170, Uralac P 3250, Uralac P 4260, Uralac P 4127, Uralac P 5127), Sirales (z.B. Sirales PE 8210, Sirales PE 8231, Sirales PE 8212) und Reafree (z.B. Reafree 6818, Reafree 6809, Reafree 6877) bekannt.

### Komponente B:

Als Epoxidharze (Komponente B) werden feste Epoxidharze mit einem EEW von 350-650, vorzugsweise von 400 bis 650 g/eq, eingesetzt, welche vorzugsweise auch einen Schmelzbereich von 60 bis 130 °C aufweisen.

Beispielsweise können die in der WO 2001/092367 beschriebenen Epoxidharze eingesetzt werden, welche auf Bisphenol-A ("4-[2-(4-Hydroxyphenyl)propan-2-yl]phenol") und Epichlorhydrin basieren, insbesondere die Diglycidylether von Bisphenol-A und höhere Additionsprodukte davon. Die Epoxyidharze können auch auf Bisphenol-F ("4,4'-Methylenbisphenol") sowie hydrogeniertem Bisphenol-A ("4,4'-Isopropylidenedicyclohexanol") und Epichlorhydrin und höheren Additionsprodukten bestehen. Es können auch Epoxidharze eingesetzt werden, die durch Reaktion von Epichlorhydrin mit Novolak Harzen hergestellt werden. Novolakharze werden durch Kondensation von Phenolverbindungen mit Formaldehyd in Gegenwart von Säurekatalysatoren hergestellt. Bei den Phenolverbindungen handelt es sich entweder um Phenol, oder Verbindungen wie Kresole, Xylenole, Resorcin, Naphthole und dergleichen.

Beispiele für Epoxidharze sind kommerziell verfügbar unter den Namen D.E.R. von Dow Chemical (z.B. D.E.R. 662E, D.E.R. 671), Araldite von Huntsman Advanced Materials (z.B. Araldite GT 6248, Araldite GT 7071, Araldite GT 7072), Eposir von Sir Industriale (z.B. Eposir 7161, Eposir 7165, Eposir 7167 PG) oder von Kukdo Chemical (z.B. YD-012, KD-211E, KD-211G, KD-242GHF). In einer besonderen Ausformulierung der Erfindung werden bevorzugt Novolak modifizierte Epoxidharze mit einem EEW von 350 bis 650 g/eq eingesetzt, wie beispielsweise Araldite GT 7220 (Huntsman), Araldite GT 6259 (Huntsman), D.E.R. 642U (Dow), KD-211D (Kukdo) oder KD-211H (Kukdo). Es können auch Kombinationen von Epoxidharzen eingesetzt werden, wenn das arithmetische Mittel der Epoxidäquivalenzgewichte im Bereich von 350 (vorzugsweise 400) bis 650 g/eq liegen muss. Die EEW der einzelnen Epoxidharze können somit auch <350 (400) g/eq oder größer >650 g/eq betragen, solange über alle Epoxidharze gemittelt der EEW im Bereich von 350 (400) bis 650 hg/eq liegt. Beispielsweise können Novolak Epoxidharze mit EEW <400 g/eq (z.B. Araldite ECN 1299, Araldite GY280, D.E.N. 438, D.E.N. 439, Quatrex 1010,...) zugegeben werden, solange das gemittelte EEW der eingesetzten Epoxidharze nicht unter 350 (400) g/eq liegt. Es ist z.B. möglich, dass die Komponente B) aus 40 Gew.% Araldite ECN 1299 (EEW 217 bis 244 g/eq) und 60 Gew.% D.E.R. 671 (EEW 475 bis 550 g/eq) besteht. Das gemittelte EEW beträgt dabei 399,7 g/eq (0,4^{∗}230,5 + 0,6^{∗}512,5 = 399,7).

In einem weiteren Aspekt der vorliegenden Erfindung werden hydrogenierte Epoxidharze, wie z.B. ST-5080 von Kukdo (EEW 550-650 g/eq), alleine oder in Kombination mit zuvor genannten Epoxidharzen eingesetzt. Durch Einsatz von hydrogenierten Epoxidharzen kann die UV Beständigkeit des Pulverlacks und somit die Lichtechtheit der Beschichtung deutlich verbessert werden. Ein Nachteil ist allerdings in der geringeren Reaktivität der hydrogenierten Epoxidharze zu sehen. Daher werden die hydrogenierten Epoxidharze bevorzugt in Kombination mit den Novolak modifizierten Epoxidharzen eingesetzt, um die Einbrennbedingungen für hitzeempfindliche Substrate einhalten zu können.

### Komponente C:

Als Komponente C) werden Carboxylgruppenhaltige kristalline oder semikristalline Polyesterharze eingesetzt, die eine arithmetisch gemittelten Säurezahl von 15 bis 80 mg KOH/g und vorzugsweise einem Schmelzpunkt von 60 bis 130 °C aufweisen. In einer bevorzugten Ausführungsform weisen diese Polyester darüber hinaus noch eine Schmelzenthalpie von 50 - 150 J/g auf.

Es können (semi)kristalline oder kristalline Polyester eingesetzt werden, welche eine beispielsweise in der DE 102006057837 A1 angegebene Zusammensetzung aufweisen. Die Polyester C) basieren auf Polycarbonsäuren und Polyolen, wobei als Polycarbonsäuren bevorzugt lineare, aliphatische Dicarbonsäuren mit 2 bis 22 Methylengruppen und/oder Terephthalsäure/Isophthalsäure in Mengen von mindestens 85 mol-%, bezogen auf die Gesamtmenge aller Polycarbonsäuren, eingesetzt werden. Als Polyole können unter anderem (cyclo)aliphatische Alkohole mit 2 bis 10 C-Atomen eingesetzt werden.

Bevorzugt werden (semi)kristalline oder kristalline Polyesterharze eingesetzt, welche als Polycarbonsäure hauptsächlich Bernsteinsäure und/oder derer Anhydride oder Derivate und als Polyol - bevorzugt hauptsächlich - 1,4-Butandiol enthalten.

### Komponente D:

Als Katalysatoren zur Beschleunigung der Reaktion zwischen Carboxylgruppen und Epoxidgruppen sowie zur Epoxid-Homopolymerisation können beispielsweise die in der WO 2001/092367 A1 angegeben Verbindungen eingesetzt werden.

Beispiele für besonders geeignete Katalysatoren sind Imidazole (wie z.B. "2- Methylimidazol", "2-Ethylimidazol", "Propylimidazole", "2-Isopropylimidazol", "2-Phenylimidazol", "2-Undecylimidazol", "2-Heptadecyl-imidazol", "1-((2-Methyl-1H-iMidazol-1-yl)Methyl)naphthalen-2-ol"), Imidazoline (wie z.B. "2-Phenyl-2-imidazoline"), tertiäre Amine (wie z.B. "2,4,6-tri-(dimethylaminomethyl)phenol", "N,N-Dimethyl-stearylamin"), Phosphoniumsalze (wie z.B. "Tetrabutylphosphoniumbromid", "Butyltriphenylphosphoniumchlorid", "Butyltriphenylphosphoniumbromid", "Ethyltriphenylphosphoniumbromid", Ammoniumverbindungen (wie z.B. "Benzytrimethylammoniumbromid", "Tetraethylammoniumbenzoat", "Cholinchlorid"), Urone (wie z.B. "Fenuron", "Diuron", "Chlortoluron", "TDI-Uron"), Guanidine (wie z.B. "Ortho-Tolylbiguanide") und/oder Zinkverbindungen (wie z.B. "Zinkacetylacentonat", "Zink 2-ethylhexylphosphat Salz"). Katalysatoren können auch in Form von Addukten (wie z.B. Imidazol-Addukte, Imidazoline-Addukte) eingesetzt werden. Die Katalysatoren (wie z.B. Imidazole, Imidazoline, Phosphoniumsalze) können bereits bei der Harzsynthese den Polyesterharzen hinzugesetzt werden.

Bevorzugt wird "2-Phenyl-2-imidazolin" (z.B. "Eutomer B31" von Eutec Chemical Co.) als Katalysator eingesetzt. Es können aber auch Kombinationen von diesem Katalysator mit ein oder mehreren der oben genannten Katalysatoren, bevorzugt mit Imidazolen (wie z.B. 2-Ethylimidazol) oder Phosphoniumsalzen (wie z.B. Ethyltriphenylphosphoniumbromid) eingesetzt werden, um die erfindungsgemäßen hochreaktiven und gleichzeitig lagerstabilen Pulverlacke zu erhalten. Durch Kombinationen dieser Beschleunigertypen lassen sich gegebenenfalls stabilere Systeme erzielen, die erhöhte Lagerstabilität bei auftretenden Homogenitätsschwankungen in der Pulverlackproduktion aufweisen.

### Komponente E:

Als zusätzliche Härter (Crosslinker) können gegebenenfalls Verbindungen eingesetzt werden, welche eine Funktionalität von ≥2 aufweisen und zum Beispiel Epoxy-, Carboxyl-, Anhydrid-, Amin-, Amid-, Hydroxyl-, und/oder Phenolgruppen aufweisen. In einer besonderen Ausführungsform des erfindungsgemäßen Pulverlacks wurde überraschend gefunden, dass bei der optionalen Zugabe eines zusätzlichen hochreaktiven Härters (Crosslinkers), wie z.B. Polyaminen, glatte Niedertemperaturpulverlacke mit Glanzgraden im Bereich von 20 bis 50 Glanzeinheiten (Messwinkel 60°) darstellbar sind.

Durch diese Polyamine und Polyamin-Addukte wie z.B. Aradur 835 (Huntsman Advanced Materials), Ancamine 2014AS/FG (Air Products) und Ancamine 2441 (Air Products) erfolgt eine zusätzliche Vernetzungsreaktion mit dem Pulverlackbindemittel, insbesondere dem enthaltenen Epoxidharz. Ohne an eine Theorie gebunden zu sein, wird vermutet, dass der Mattierungseffekt darauf beruht, dass verschiedene Härtungsreaktionen mit unterschiedlicher Reaktivität ablaufen. Es wird vermutet, dass die Amingruppen bereits bei niedrigeren Temperaturen mit den Epoxidgruppen reagieren als die Carboxylgruppen (der Polyesterharze) mit den Epoxidgruppen und/oder eine höhere Reaktionsgeschwindigkeit aufweisen. Durch diese unterschiedlichen Härtungsreaktionen bildet sich vermutlich eine Rauigkeit an der Pulverlackoberfläche aus. Diese Rauigkeit, die zur Lichtbrechung und somit Mattierung führt, ist aber ausreichend niedrig, um nach gängigen Industriemaßstäben eine glatte Oberfläche zu erzeugen.

In einer noch spezifischeren Ausformulierung dieser Erfindung kann der Pulverlack noch zusätzliche oder alternative Mattierungsmittel enthalten. Bei strukturierten Oberflächen erfolgt die Mattierung meist über die Zugabe von Strukturierungsmitteln (z.B. mikronisiertes Teflon oder mikronisierte PTFE-Wachs Blends). Die Mattierung kann aber auch durch Füllstoffe, Wachse, Acrylatharze oder die zuvor beschriebene Methode mit hochreaktiven Härtern (z.B. Polyamine) erfolgen.

Weitere Bestandteile der Pulverlackformulierung können Additive, Pigmente und Füllstoffe sein, wie sie an sich im Stand der Technik bekannt sind. Als Additive können, ohne Anspruch auf Vollständigkeit, Verlaufsmittel, Antikrateradditive, Strukturmittel, Entgasungsmittel, Antioxidantien, UV-Absorber, (Tribo-)Ladungssteuerstoffe, Antiblocking Additive (z.B. Wachse zur Verbesserung der Lagerstabilität), Fluidisierungsmittel, Flammschutzmittel, IR-Absorber und Additive zur Verbesserung der Oberflächeneigenschaften (wie z.B. Härte, Abriebbeständigkeit, Kratzbeständigkeit, Chemikalienbeständigkeit, Überbeschichtbarkeit, Haftung, Oberflächenspannung, und Substratbenetzung) eingesetzt werden.

In einer besonderen Ausformulierung können die Komponenten C) und/oder D) durch Mischen und Extrusion mit einem oder mehreren der Bindemittel vorverteilt werden. Das Granulat von dieser Extrusion wird anschließend für die Pulverlackherstellung des Komplettansatzes verwendet. Durch dieses sogenannte Meltmixing können Pulverlackeigenschaften wie zum Beispiel Reaktivität und Lagerstabilität verbessert werden. Außerdem können sich Verbesserungen für den Pulverlackherstellprozess ergeben.

Die Vorteile der erfindungsgemäß vorgesehenen Pulverlackformulierungen lassen sich wie folgt zusammenfassen:
1. Zur Verfügung gestellt wird ein hochreaktiver Pulverlack, welcher zumindest bei 3 min bis 5 min bei 130 °C bis 150 °C (Substratoberflächentemperatur) eingebrannt werden kann und dabei eine Beschichtung liefert, die stark verformbar ist und gute Oberflächeneigenschaften aufweist. Die erfindungsgemäß vorgesehenen Pulverlacke sind insbesondere geeignet für Einschicht-Decklackanwendungen auf Holzsubstraten, bei welchen aufgrund dimensionaler Schwankungen starke Verformungen auftreten können. Der erfindungsgemäße Pulverlack ist bei Raumtemperatur für mehrere Monate lagerstabil.
2. Der oben beschriebene Pulverlack ist geeignet zur Ausbildung einer glatten Oberfläche mit niedrigem Glanzgrad von 20 bis 50 Glanzeinheiten bei Messwinkel 60°.
3. Die oben beschriebenen Pulverlacke weisen eine zusätzlich verbesserte UV-Beständigkeit und Lichtechtheit durch Einsatz von hydrogenierten Epoxidharzen auf.

### Beispiele:

Es wurden erfindungsgemäße Pulverlacke, welche die weiter unten angegebenen Komponenten enthalten, wie folgt hergestellt.

Die einzelnen Komponenten wurden eingewogen, mit einem Thermo Prism Pilot-3 Labormischer gemischt und anschließend wurde der Pulverlackansatz auf einem Theysohn TSK 20/24 Doppelschneckenextruder bei 400 min⁻¹ und einem Drehmoment von 50-80 % extrudiert. Die Temperatureinstellung erfolgte bei den letzten beiden Zonen des Extruders auf 80 °C.

Das extrudierte Material wurde zu Granulat zerkleinert und anschließen auf einer ACM-2L Prallsichtermühle von Hosokawa Alpine vermahlen. Die hergestellten erfindungsgemäßen Pulverlacke hatten eine mittlere Partikelgröße (d50) von 25 - 50 µm.

Von den Pulverlacken wurde zur Prüfung der Reaktivität die Gelzeit in Anlehnung an ISO 8130-6 gemessen. Die Gelzeitmessungen wurden bei einer Temperatur des Heizblocks von 130 °C durchgeführt. Anders als in der Norm angegeben wurde die Zeitmessung sofort nach Überführen der Pulverlack-Probemenge in die Vertiefung im Heizblock gestartet und nicht erst nachdem das ganze Pulver geschmolzen ist.

Mit den erfindungsgemäßen Pulverlacken wurden Aluminiumbleche (0,7 mm Stärke) mittels elektrostatischer Pulverapplikation beschichtet und 5 min bei 160°C im Umluftofen (elektrischer Umluftofen, Heraeus UT 12) eingebrannt. Es wurden Standard Pulverlackprüfungen, wie Schichtdicke nach ISO 2360, Glanzgrad nach ISO 2813, Erichsen Tiefungsprüfung nach ISO 1520 und Dornbiegeversuch nach ISO 1519, durchgeführt.

Die erfindungsgemäßen Pulverlacke wurden mittel elektrostatischer Applikation auch auf MDF Platten appliziert und anschließend in einem gaskatalytischen Infrarotofen der Firma Vulcan Catalytics ausgehärtet. Als MDF wurden die Typen "MB" und "MBP-L" der Firma Egger mit Plattendicken von 19 mm und 25 mm eingesetzt. Der Einbrennprozess im Infrarotofen bestand aus einer Aufheizphase von 60 bis 120 sec, in welcher die pulverbeschichtete MDF auf die Härtungstemperatur von 130 °C bis 150 °C gebracht wurde. Anschließende wurden die Ofeneinstellungen angepasst, damit während der 3 min bis 5 min dauernden Härtung die Substratoberflächentemperatur im Bereich von 130 °C bis 150 °C konstant blieb.

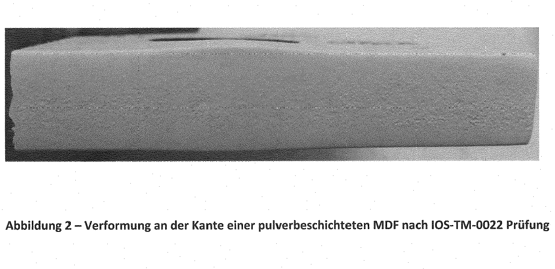

Die mit den erfindungsgemäßen Pulverlacken beschichteten MDF Platten wurden vor allem für die Beurteilung der Rissbeständigkeit an den Kanten in Anlehnung an die IKEA Prüfnorm IOS-TM-0022 verwendet. Bei dieser Prüfung wird eine Topfbandbohrung mit Durchmesser 35 mm im Abstand von 5 mm zur Kante, 14 mm (bei 19 mm dicken MDF) oder 20 mm (bei 25 mm dicken MDF) tief gefräst. Diese Bohrung wird anschließend mit destilliertem Wasser aufgefüllt und für die Prüfdauer bei Raumtemperatur (20±2 °C) gelagert. Die Prüfungen wurden bevorzugt bei Raumtemperatur durchgeführt, um die Belastungen bei den tatsächlichen Einsatztemperaturen (z.B. von Möbelteilen) zu simulieren und nicht wie in der Prüfnorm angegeben bei ca. 6°C. Die Beurteilung der Rissbeständigkeit erfolgt anhand der Zeit die vergeht bis an der Kante oder auch im Bereich der Topfbandbohrung Risse auftreten (Abbildung 2).

Auf den mit den erfindungsgemäßen Pulverlacken beschichteten MDF Mustern wurden auch der Glanzgrad (60° MW) bei Messwinkel 60° bestimmt und die Aushärtung anhand der Chemikalienbeständigkeit mit Aceton oder Methylethylketon (MEK) bestimmt. Eine ausreichende Vernetzung ist gegeben, wenn bei Prüfung nach EN 12720 mit Aceton (oder MEK) bei einer Prüfdauer von 10 sec eine Beurteilung (nach EN12720) von zumindest 2 erreicht wird. Die Haftung zwischen Pulverlack und MDF wurde mittels Gitterschnittprüfung nach ISO 2409 getestet. Für eine ausreichende Haftung muss der Gitterschnitt Prüfwert Gt0 oder Gt1 betragen. Dies wurde für die nachfolgend angeführten Beispiele entsprechend des erfindungsgemäßen Pulverlacks erreicht.Beispiele A1-A6:
Anhand der Beispiele A1 bis A6 wurde untersucht, welche amorphen Polyester und welche Epoxidharze für die erfindungsgemäßen hochreaktiven Pulverlacke eingesetzt werden können.

Die amorphen Polyester weisen folgende Säurezahlen auf. "Polyester 1" ist ein Carboxyl-Polyester mit einer Säurezahl von 68-76 mg KOH/g und einer Viskosität von 2,0 bis 3,5 Pa*s (gemessen bei 200 °C mit Brookfield CAP 2000+ nach der Cone & Plate Messmethode), welcher aus den wesentlichen Komponenten Terephthalsäure, Adipinsäure, Neopentylglykol, Monoethylenglykol und Trimellitsäureanhydrid besteht und durch Schmelzpolymerisation bei einer Temperatur von bis zu 240 °C hergestellt wurde.

"Crylcoat 1783-0" hat eine Säurezahl von 30-38 mg KOH/g und eine Viskosität von 4,2-5,8 Pa*s (Brookfield Viscosity @ 200 °C). Crycloat 1626-0 hat eine Säurezahl von 44-52 mg KOH/g und eine Viskosität von 2-4 Pa*s (Brookfield Viscosity @ 200 °C). Crycloat 1660-0 hat eine Säurezahl von 45-51 mg KOH/g und eine Viskosität von 6,8-10,2 Pa*s (Brookfield Viscosity @ 175 °C).

D.E.R. 692 ist ein Epoxidharz mit einem EEW von 660-720 g/eq und Araldit GT 7004 ist ein Epoxidharz mit 714-752 g/eq.

**Tabelle 1 - Beispiele A1) bis A6) mit unterschiedlichen amorphen Polyesterharze und unterschiedlichen Epoxidharzen**

| **Komponente** | **A1** | **A2** | **A3** | **A4** | **A5** | **A6** |
|---|---|---|---|---|---|---|
| Polyester 1 | 28,7 | | | 28,7 | 28,7 | |
| Crylcoat 1783-0 | | 46 | | | | |
| Crylcoat 1626-0 | | | 40 | | | |
| Crylcoat 1660-0 | | | | | | 33,4 |
| Sirales PE 5900 | 9 | 9 | 9 | 9 | 9 | 10 |
| Araldit GT 7220 | 22,3 | 17,8 | 21 | | | |
| D.E.R 692H | | | | 29 | | 23,7 |
| ARALDIT GT 7004 | | | | | 30,8 | |
| Polyester 2 | 2,5 | 2,5 | 2,5 | 2,5 | 2,5 | 2,5 |
| Eutomer B31 | 1 | 1 | 1 | 1 | 1 | 1 |
| LANCO WAX TF 1778 | 1 | 1 | 1 | 1 | 1 | 1 |
| BYK 3900 P | 1 | 1 | 1 | 1 | 1 | 1 |
| PORTAFILL A 40 | 20 | 7,2 | 10 | 13,3 | 11,5 | 12,9 |
| Tioxide TR81 | 14,5 | 14,5 | 14,5 | 14,5 | 14,5 | 14,5 |

**Tabelle 2 - Prüfergebnisse der Beispiele A1) bis A6)**

| **Prüfungen** | **A1** | **A2** | **A3** | **A4** | **A5** | **A6** |
|---|---|---|---|---|---|---|
| Gelzeit bei 130 °C [sec] | 159 | 299 | 266 | 265 | 262 | 299 |

Anhand der Beispiele A1 bis A6 kann festgestellt werden, dass nur Beispiel A1 mit einer Gelzeit von 159 Sekunden (gemessen bei 130 °C) eine ausreichende Reaktivität aufweist. Die anderen Beispiele mit amorphen Polyesterharzen mit Säurezahlen kleiner 50 mg KOH/g und mit Epoxidharzen mit EEW größer 650 g/eq sind zu wenig reaktiv und können bei den beschriebenen Einbrennbedingungen nicht ausgehärtet werden.

### Beispiele 1) bis 12):

In den nachfolgenden Beispielen werden Pulverlack beschrieben, welche die erfindungsgemäßen Anforderungen an Reaktivität, Verformbarkeit und Lagerstabilität erfüllen.

Die Pulverlacke bestehen aus folgenden Komponenten:
Polyester 1 wurde unter den zuvor angegebenen Beispielen A1) bis A6) bereits beschrieben.Araldite GT 7220 (von Huntsman) ist ein Epoxidharz basierend auf Bisphenol-A und Phenol-Novolak mit einem EEW von 518-546 g/eq.

Sirales PE 5900 (von Sir Industriale) ist ein (semi)kristallines Polyesterharz mit einer Säurezahl von 28-36 mg KOH/g und einem Schmelzbereich von 105-120 °C.

Eutomer B31 (von Eutec Chemical Co.) ist ein 2-Phenyl-2-imidazolin Katalysator.

Bei Polyester 2 handelt es sich um einen OH-funktionelle Polyester, der ca. 10 Gew.-% Ethyltriphenylphosphoniumbromid enthält. Die OH-Zahl von Polyester 2 ist im Bereich von 39-49 mg KOH/g und die Viskosität beträgt 1,0-2,5 Pa*s (bei 200°C, Cone & Plate, Brookfield CAP 2000+). Polyester 2 besteht aus den wesentlichen Komponenten Terephthalsäure, Neopentylglykol, Monoethylenglykol und Isophthalsäure, wurde durch Schmelzpolymerisation bei einer Temperatur von bis zu 240 °C hergestellt und anschließend mit ca. 10 % Ethyltriphenylphosphoniumbromid versetzt.

Reafree C4705-10 (Arkema) ist ein Katalysator-Masterbatch basierend auf einem COOH-funktionellen Polyester mit Säurezahl 30-40 mg KOH/g, welcher ca. 10 Gew.% Ethyltriphenylphosphoniumbromid enthält.

Modaflow P6000 und BYK-3900P werden als Antikrater- und Verlaufsmittel zugesetzt.

Deuteron AP 348 und Carbocure 8000 (von Lubrizol) werden vorzugsweise als Mattierungswachse zugesetzt.

Bei Ceridust 6721 handelt es sich um ein Polypropylen/Amid-Wachs, welches vorzugsweise aufgrund seiner "Anti-Blocking"-Eigenschaften zur Verbesserung der Lagerstabilität des Pulverlacks hinzugefügt wird.

Lanco TF 1778 wurde zur Verbesserung der Oberflächeneigenschaften, insbesondere der Kratzbeständigkeit, hinzugefügt.

**Tabelle 3 - Beispiele 1 bis 6 - Pulverlacke mit glatter Oberfläche**

| **Komponente** | **Beispiel1** | **Beispiel2** | **Beispiel3** | **Beispiel4** | **Beispiel5** | **Beispiel6** |
|---|---|---|---|---|---|---|
| Polyester 1 | 31,7 | 31,7 | 26,5 | 28,7 | 32,7 | 32,6 |
| Araldit GT 7220 | 24,3 | 24,3 | 21 | 22,3 | 25,5 | 25,9 |
| Sirales PE 5900 | 9 | 9 | 9 | 9 | 10 | 12 |
| Eutomer B31 | 1 | 1 | | 1 | 1 | 1,5 |
| 2 - Ethylimidazol | | | 1 | | | |
| Polyester 2 | 2 | | | 2,5 | 2,5 | |
| Reafree C4705-10 | | 2 | | | | |
| Modaflow P6000 | | | | | | 1 |
| BYK 3900 P | 1 | 1 | 1 | 1 | | |
| Deuteron AP 348 | | | | | | 2 |
| Carbocure 8000 | | | | | 5 | |
| Ceridust 6721 | | | | | 2 | |
| Lanco TF 1778 | 1 | 1 | 1 | 1 | 1 | |
| Ti-Select 6200 | | | | | | 25 |
| Tioxide TR81 | 16 | 16 | 20,5 | 14,5 | 20,3 | |
| Portafill A 40 | 14 | 14 | 20 | 20 | | |

**Tabelle 4 - Prüfwerte der Beispiele 1 bis 6**

| **Prüfungen** | **Beispiel1** | **Beispiel2** | **Beispiel3** | **Beispiel4** | **Beispiel5** | **Beispiel6** |
|---|---|---|---|---|---|---|
| Gelzeit bei 130 °C [sec] | 140 | 134 | 152 | 159 | 180 | 154 |

| Aluminiumblech (5min 160°C) | | | | | | |
|---|---|---|---|---|---|---|
| Schichtdicke [µm] | 49 | 65 | 60 | 75 | 75 | 80 |
| Glanzgrad (60° MW) | 70 | 69 | 59 | 59 | 69 | 66 |
| Erichsentiefung [mm] | 3,8 | 4,2 | 2,9 | 4,3 | 7 | 7,2 |
| Dornbiegeversuch [mm] | 7,1 | 7,1-8,9 | 17,4 | n.b. (nicht bekannt) | n.b. | n.b. |

| MDF-Muster(3min 150°C) | | | | | | |
|---|---|---|---|---|---|---|
| Schichtdicke [µm] | 100-160 | 180 | 130-240 | 120 | 70-80 | 130 |
| Glanzgrad (60° MW) | 68-71 | 71 | 55 | 61 | 56-61 | 63 |
| Wasserquelltest bei Raumtemperatur (25 °C, in Anlehnung an IOS-TM-0022) | keine Risse nach 48 h | keine Risse nach 48 h | keine Risse nach 48 h | keine Risse nach 24 h | keine Risse nach 48 h | keine Risse nach 48 h |

| Lagerstabilität- nachLagerungbei 30 °C | | | | | | |
|---|---|---|---|---|---|---|
| Gelzeit (130 °C) nach 14 Tagen [sec] | 78 | 73 | 82 | 90 | 105 | n.b. |
| Gelzeit (130 °C) nach 30 Tagen [sec] | n.b. | n.b. | n.b. | 80 | 98 | n.b. |

### Beispiel 1) und 2)

Bei diesen Beispielen wurde eine Kombination von zwei Beschleunigern eingesetzt.

Bei Beispiel 1) wurde eine Gelzeit (bei 130 °C) von 140 Sekunden gemessen, bei Beispiel 2) von 134 Sekunden. Beide Pulverlacke liefern bei Aushärtung von 3 min 150 °C auf MDF eine sehr gute Verformbarkeit. Die Prüfung der Verformbarkeit auf MDF, in Anlehnung an IOS-TM-0022, wurde bei Raumtemperatur (25 °C) für 48 Stunden ohne Risse bestanden. Die Lagerstabilität der beiden Pulverlacke ist als ausreichen einzustufen. Nach 14 Tagen Lagerung bei 30 °C hat die Gelzeit von Beispiel 1) auf 78 Sekunden abgenommen (Abnahme um 44,3 %), bei Beispiel 2) auf 73 Sekunden (Abnahme um 41,5 %).

### Beispiel 3)

Bei Beispiel 3) wurde nur 2-Ethylimidazol als Katalysator eingesetzt. Die Reaktivität war sehr hoch, mit einer Gelzeit (gemessen bei 130 °C) von 152 Sekunden, wobei die Gelzeit nach 14 Tagen Lagerung (bei 30 °C) um ca. 50 % abnahm. Die Lagerstabilität kann somit als ausreichend beurteilt werden. Bei Beispiel 3) wurde eine Mattierung auf einen Glanzgrad von 55 (60° MW) durch den hohen Anteil an Füllstoff (Portafill A 40) erreicht. Aufgrund des geringeren Bindemittelanteils betrug die Erichsentiefung nur 2,9 mm. Allerdings war die Verformbarkeit auf MDF sehr gut und die IOS-TM-0022 Prüfung wurde bei Raumtemperatur für 48 Stunden ohne Risse bestanden.

### Beispiel 4)

Bei Beispiel 4) wurde die gleiche Kombination an Katalysatoren wie bei Beispiel 1) verwendet. Eine Mattierung erfolgte über den hohen Anteil an Portafill A 40. Die Abnahme der Gelzeit erfolgte nach Lagerung bei 14 Tagen 30 °C um ca. 43 % (Gelzeit bei 130 °C nimmt auf 90 sec ab). Nach 30 Tagen bei 30 °C nimmt die Gelzeit auf 80 sec ab, was eine Abnahme von ca. 50 % entspricht. Die Lagerstabilität kann als ausreichend bis gut beurteilt werden.

Auf dem MDF Muster wurde bei Schichtdicke 120 µm ein Glanzgrad von 61 (bei 60°) gemessen. DIE IOS-TM-0022 Prüfung wurde für 24 Stunden ohne Risse bestanden, was einer guten Verformbarkeit entspricht. Die Chemikalienbeständigkeit wurde bei 10 Sekunden MEK mit der Bewertung 2 (nach EN 12720) beurteilt.

### Beispiel 5)

Bei Beispiel 5) erfolgt die Mattierung durch das Additiv "Carbocure 8000" auf einen Glanzgrad von 69 (60° MW) auf Aluminiumblech und 56-61 (60° MW) auf dem MDF Muster. Die Gelzeit (130°C) wurde mit 180 Sekunden gemessen und der Pulverlack besteht die IOS-TM-0022 Prüfung für 48 Stunden ohne Risse. Die Gelzeit nimmt nach 14 Tagen bei 30 °C auf ca. 105 Sekunden ab (Abnahme von ca. 42 %) und nach 30 Tagen bei 30 °C auf 98 Sekunden (Abnahme von ca. 46 %). Die Lagerstabilität kann als gut beurteilt werden.

### Beispiel 6)

Bei Beispiel 6) wurde nur 2-Penyl-2-imidazolin als Katalysator eingesetzt. Die Verformbarkeit (Prüfung auf Kantenrisse) wurden nach der IKEA Prüfmethode IOS-TM-0022 durchgeführt, wobei die Lagerung bei Raumtemperatur (ca. 25 °C) erfolgte. Der Test wurde ohne Kantenrisse nach 48 Stunden Quellzeit bestanden. Die Chemikalienbeständigkeit des Lackfilms wurde mittels Aceton nach EN 12720 geprüft. Bei einer Prüfzeit von 10 Sekunden wurde mit Aceton eine Bewertung von 2 (nach EN 12720) erzielt. Die Oberfläche des eingebrannten Pulverlacks von Beispiel 6 war glatt mit vernachlässigbarem Orangenhauteffekt. Der Glanzgrad war bei dem Aluminiumblech und dem MDF Muster im Bereich von 63-66 Glanzeinheiten (bei Messwinkel 60°).

### Beispiel 7) und 8)

Bei Beispiel 7) und Beispiel 8) wurde durch Zugabe eines Polyamins eine glatte Oberfläche mit niedrigem Glanzgrad erhalten. Als Epoxidharz wurde D.E.R. 642U von Dow Chemicals eingesetzt, welches ein EEW von 520-560 g/eq aufweist. Als Komponente E wurde Aradur 835 (von Huntsman) eingesetzt, ein aliphatisches Polyamin-Addukt mit einer Aminzahl von 180-210 mg KOH/g. Durch die Zugabe des Aradur 835 wurde der Pulverlack mattiert. Als Katalysator wurde 2-Phenyl-2-imidazolin (Eutomer B31) eingesetzt.

**Tabelle 5 - Beispiele 7 und 8 - Pulverlacke mit glatter Oberfläche**

| **Komponente** | **Beispiel7** | **Beispiel8** |
|---|---|---|
| Polyester 1 | 27,8 | 22,4 |
| D.E.R. 642U | 29,5 | 27,6 |
| Sirales PE 5900 | 10 | 10 |
| Eutomer B31 | 1,2 | 1 |
| Aradur 835 | 4,1 | 5 |
| Modaflow P6000 | 1 | |
| BYK 3900 P | | 1 |
| Lanco TF 1778 | 0,8 | 1 |
| Pigmente | 0,06 | |
| Ti-Select 6200 | 22,4 | |
| Tioxide TR81 | | 15 |
| Portafill A 40 | | 17 |
| Omyacarb 1-SV | 3,14 | |

**Tabelle 6 - Prüfwerte der Beispiele 7 und 8**

| **Prüfungen** | **Beispiel7** | **Beispiel8** |
|---|---|---|
| Gelzeit bei 130 °C [sec] | 190 | 166 |

| Aluminiumblech (5min 160°C) | | |
|---|---|---|
| Schichtdicke [µm] | 98 | 85 |
| Glanzgrad (60° MW) | 48 | 23 |
| Erichsentiefung [mm] | n.b. | 4,4 |

| MDF-Muster(3min 150°C) | | |
|---|---|---|
| Schichtdicke [µm] | n.b. | 240 |
| Glanzgrad (60° MW) | n.b. | 23 |
| Wasserquelltest bei Raumtemperatur (25 °C, in Anlehnung an IOS-TM-0022) | n.b. | keine Risse nach 8 h |

| Lagerstabilität- nachLagerungbei 30 °C | | |
|---|---|---|
| Gelzeit (130 °C) nach 14 Tagen [sec] | n.b. | 150 |

Bei Beispiel 7) wurde eine glatte Oberfläche mit Glanzgrad 48 (60° MW) auf Aluminiumblech erhalten. Bei Beispiel 8) konnte der Glanzgrad auf 23 (60° MW) reduziert werden.

### Beispiele 9) bis 12)

Bei den Beispielen 9) bis 12) wurden Kombinationen von Epoxidharzen eingesetzte. Die Formulierungen enthalten jeweils "Araldit ECN 1299", welches ein EEW von 217-244 g/eq aufweist, und jeweils ein weiteres Epoxidharz. D.E.R. 671 hat ein EEW von 475-550 g/eq, D.E.R. 662E hat ein EEW von 590-630 g/eq und D.E.R. 692 hat ein EEW von 660-720 g/eq.

**Tabelle 7 - Beispiele mit Kombinationen von Epoxidharzen**

| **Komponente** | **Beispiel9** | **Beispiel10** | **Beispiel11** | **Beispiel12** |
|---|---|---|---|---|
| Polyester 1 | 36,90 | 36,70 | 35,80 | 35,00 |
| Sirales PE 5900 | 10,00 | 10,00 | 10,00 | 10,00 |
| Araldit ECN 1299 | 7,50 | 7,50 | 7,50 | 7,50 |
| D.E.R. 671 | 10,60 | | | |
| D.E.R. 642U | | 10,80 | | |
| D.E.R. 662E | | | 11,70 | |
| D.E.R. 692 | | | | 12,50 |
| Eutomer B31 | 1,00 | 1,00 | 1,00 | 1,00 |
| LANCO WAX TF 1778 | 1,00 | 1,00 | 1,00 | 1,00 |
| BYK 3900 P | 1,00 | 1,00 | 1,00 | 1,00 |
| Tioxide TR81 | 32,00 | 32,00 | 32,00 | 32,00 |

Bei den Beispielen 9) bis 12) wurden die Anforderungen der Reaktivität erfüllt. Die Lagerstabilität ist bei den Beispielen 9), 11) und 12) gut. Beispiel 10), welches eine sehr niedrige Gelzeit mit 127 Sekunden aufweist, zeigt einen Abfall von ca. 50% in der Gelzeit. Die Verformbarkeit wurde bei den Beispielen 9), 10) und 11) anhand der IOS-TM-0022 Prüfung auf MDF getestet und als gut bis sehr gut beurteilt.

**Tabelle 8- Prüfergebnisse der Beispiele 9 bis 12**

| **Prüfungen** | **Beispiel9** | **Beispiel10** | **Beispiel11** | **Beispiel12** |
|---|---|---|---|---|
| Gelzeit bei 130 °C [sec] | 141 | 127 | 152 | 157 |

| Aluminiumblech (5min 160°C) | | | | |
|---|---|---|---|---|
| Schichtdicke [µm] | 70 | 95 | 115 | 85 |
| Glanzgrad (60° Messwinkel) | 82,9 | 90 | 90 | 89 |
| Erichsentiefung [mm] | 4,4 | 6,1 | 6,6 | 6,5 |

| MDF-Muster(3min 150°C) | | | | |
|---|---|---|---|---|
| Schichtdicke [µm] | 90-130 | 85-140 | 65-90 | n.b. |
| Glanzgrad (60° Messwinkel)) | 69-72 | 79-80 | 54-55 | n.b. |
| Wasserquelltest bei Raumtemperatur (25 °C, in Anlehnung an IOS-TM-0022) | keine Risse nach 48 h | keine Risse nach 48 h | keine Risse nach 8 h | n.b. |

| Lagerstabilität- nachLagerungbei 30 °C | | | | |
|---|---|---|---|---|
| Gelzeit (130 °C) nach 14 Tagen [sec] | 71 | 64 | 92 | 93 |

## Patentansprüche

1. Pulverlackzusammensetzungen enthaltend eine Bindemittelkombination, **dadurch gekennzeichnet, dass** die Bindemittelkombination folgende Komponenten umfasst:
A) 20 bis 70 Gew.-% der Bindemittel von einem oder mehreren amorphen, Carboxylgruppen enthaltenden Polyesterharzen, mit einer arithmetisch gemittelten Säurezahl von 50 bis 100 mg KOH/g,
B) 20 bis 50 Gew.-% der Bindemittel von einem oder mehreren Epoxidgruppen enthaltenden Polymeren mit einem arithmetisch gemittelten Epoxid-Äquivalenzgewicht von 350 bis 650 g/eq, vorzugsweise von 400 bis 650 g/eq,
C) 5 bis 30 Gew.-% der Bindemittel von einem oder mehreren kristallinen oder semikristallinen, Carboxylgruppen enthaltenden Polyesterharzen, mit einer arithmetisch gemittelten Säurezahl von 15 bis 80 mg KOH/g,
D) 0,5 bis 4 Gew.% (auf die Gesamtformulierung) von einem oder mehreren Katalysatoren (Beschleunigern) für die Vernetzungsreaktion(en) und gegebenenfalls
E) 0 bis 10 Gew.% (auf die Gesamtformulierung) von einem oder mehreren Komponenten mit reaktiven Gruppen für Vernetzungsreaktion(en) mit den Carboxylgruppen und/oder Epoxidgruppen der Komponenten A), B) und C),
wobei die Schmelzviskosität des Pulverlacks gemessen mittels Platte-Platte-Messgeometrie bei einer Aufheizrate von 5 °C/min ein Minimum im Bereich von 300 - 2000 Pa*s aufweist.

2. Pulverlackzusammensetzung gemäß Anspruch 1, **dadurch gekennzeichnet, dass** die Bindemittelkombination folgende Komponenten umfasst:
A) 20 bis 70 Gew.-% der Bindemittel von einem oder mehreren amorphen, Carboxylgruppen enthaltenden Polyesterharzen, mit einer arithmetisch gemittelten Säurezahl von 50 bis 100 mg KOH/g,
B) 20 bis 50 Gew.-% der Bindemittel von einem oder mehreren Epoxidgruppen enthaltenden Polymeren basierend auf Bisphenol-A und Phenol-Novolak, wobei die Phenol-Novolak modifizierten Epoxidharze bevorzugt ein arithmetisch gemitteltes Epoxid-Äquivalenzgewicht von 350 bis 650 g/eq, vorzugsweise von 400 bis 650 g/eq aufweisen.,
C) 5 bis 30 Gew.-% der Bindemittel von einem oder mehreren kristallinen oder semikristallinen, Carboxylgruppen enthaltenden Polyesterharzen, mit einer arithmetisch gemittelten Säurezahl von 15 bis 80 mg KOH/g,
D) 0,5 bis 4 Gew.% (auf die Gesamtformulierung) von einem oder mehreren Katalysatoren (Beschleunigern) für die Vernetzungsreaktion(en) und gegebenenfalls
E) 0 bis 10 Gew.% (auf die Gesamtformulierung) von einem oder mehreren Komponenten mit reaktiven Gruppen für Vernetzungsreaktion(en) mit den Carboxylgruppen und/oder Epoxidgruppen der Komponenten A), B) und C).

3. Pulverlackzusammensetzung nach Anspruch 1 oder 2, **dadurch gekennzeichnet, dass** die (semi)kristallinen Polyester (Komponente C) als Polycarbonsäure Bernsteinsäure und/oder derer Anhydride und/oder Derivate enthalten.

4. Pulverlackzusammensetzung nach Anspruch 3, **dadurch gekennzeichnet, dass** als Polyol bei der Komponente C 1,4-Butandiol enthalten ist.

5. Pulverlack nach den vorangegangenen Ansprüchen, **dadurch gekennzeichnet, dass** als Polyol der Komponente C über 50 mol%, bevorzugt über 75 mol% und besonders bevorzugt über 90 mol% 1,4-Butandiol und als Polycarbonsäure über 50 mol%, bevorzugt über 75 mol% und besonders bevorzugt über 90 mol% Bernsteinsäure und/oder derer Anhydride und/oder derer Derivate eingesetzt wird.

6. Pulverlackzusammensetzung nach einem der Ansprüche 1 bis 5, **dadurch gekennzeichnet, dass** die (semi)kristallinen Polyester (Komponente C) eine Schmelztemperatur bzw. einen Schmelzbereich von 60 bis 130 °C und eine Viskosität von 0,1 bis 2 Pa*s bei 130 °C gemessen im Cone & Plate Verfahren (Brookfield CAP 2000+) aufweisen.

7. Pulverlackzusammensetzung nach einem der Ansprüche 1 bis 6, **dadurch gekennzeichnet, dass** 30-100 Gew.% von Komponente B aus einem hydrogenierten Epoxidharz bestehen.

8. Pulverlackzusammensetzung nach einem der Ansprüche 1 bis 7, **dadurch gekennzeichnet, dass** als Komponente E) Polyaminverbindungen und/oder Polyamin-Addukte enthalten sind.

9. Pulverlackzusammensetzung nach einem der Ansprüche 1 bis 8, **dadurch gekennzeichnet, dass** als Katalysator (Komponente D) 0,3 bis 2,0 Gew.% (auf die Gesamtformulierung) 2-Phenyl-2-imidazolin enthalten ist.

10. Pulverlackzusammensetzung nach einem der Ansprüche 1 bis 9, **dadurch gekennzeichnet, dass** als Katalysatoren (Komponente D) 0,1 bis 1,0 Gew.% (auf die Gesamtformulierung) Phosphoniumsalze und/oder Ammoniumsalze enthalten sind, insbesondere bevorzugt aber nicht ausschließlich Ethyltriphenylphosphoniumbromid.

11. Pulverlackzusammensetzung nach einem der Ansprüche 1 bis 10, **dadurch gekennzeichnet, dass** als Katalysatoren (Komponente D) 0,1-3,0 Gew.% (auf die Gesamtformulierung) Imidazole enthalten sind.

12. Pulverlackzusammensetzung nach einem der Ansprüche 1 bis 11, **dadurch gekennzeichnet, dass** sie als Einkomponenten- oder Zweikomponenten-Pulverlacke hergestellt sind.

13. Pulverlackzusammensetzung nach einem der Ansprüche 1 bis 12, **dadurch gekennzeichnet, dass** bei einer zumindest 80 µm dicken Beschichtung von 19 mm dicken MDF-Platte der Wasserquelltest in Anlehnung an IKEA Prüfnorm IOS-TM-0022 für mehr als 12 Stunden ohne Risse bestanden wird, bevorzugt für 24 Stunden ohne Risse.

14. Verfahren zur Herstellung einer Pulverlackzusammensetzung nach einem der Ansprüche 1 bis 13, **dadurch gekennzeichnet, dass** die Komponente C) und/oder Komponente D), in einem der Bindemittel oder einer Kombination von Bindemitteln, sowie gegebenenfalls anderer Pulverlackbestandteile, durch Extrusion vorverteilt wird, wobei das extrudierte Produkt anschließend als Rohstoff für die Pulverlackherstellung eingesetzt wird.

15. Verwendung einer Pulverlackzusammensetzung nach einem der Ansprüche 1 bis 13 für die Beschichtung von Substraten, insbesondere für die Beschichtung von temperaturempfindlichen Substraten aus Kunststoffen und Holzwerkstoffen, wie z.B. LDF, MDF, HDF, Spanplatten, OSB, BOF (Board of Frame), Sperrholz, Thermoholz, Vollholz und WPC) als Einschicht-Decklack oder nach vorhergehender Beschichtung mit einer Basislackierung.

16. Verwendung einer Pulverlackzusammensetzung nach einem der Ansprüche 1 bis 13 für die Beschichtung von Substraten und anschließende Überbeschichtung mit einem Pulverlack und/oder Flüssiglack und/oder anderem Beschichtungsmittel wie Toner und Tinten.

17. Verwendung einer Pulverlackzusammensetzung nach einem der Ansprüche 1 bis 13 für die Beschichtung von Holz oder Holz-basierenden Substraten wie LDF, MDF, HDF, Spanplatten, OSB, BOF (Board of Frame), Sperrholz, Thermoholz, Vollholz und WPC.

## Claims

1. Powder coating compositions containing a binder combination, **characterised in that** the binder combination comprises the following components:
A) 20 to 70 wt.% of the binder of one or more amorphous polyester resins containing carboxyl groups and having an arithmetically averaged acid number of 50 to 100 mg KOH/g,
B) 20 to 50 wt.% of the binder of one or more polymers containing epoxide groups and having an arithmetically averaged epoxide equivalent weight of 350 to 650 g/eq, preferably 400 to 650 g/eq,
C) 5 to 30 wt.% of the binder of one or more crystalline or semicrystalline polyester resins containing carboxyl groups and having an arithmetically averaged acid number of 15 to 80 mg KOH/g,
D) 0.5 to 4 wt.% (based on the total formulation) of one or more catalysts (accelerators) for the cross-linking reaction(s) and optionally
E) 0 to 10 wt.% (based on the total formulation) of one or more components having reactive groups for cross-linking reaction(s) with the carboxyl groups and/or epoxide groups of components A), B) and C),
the melting viscosity of the powder coating measured by means of plate-plate measurement geometry at a heating rate of 5°C/min having a minimum in the range of 300 to 2000 Pa*s.

2. Powder coating composition according to claim 1, **characterised in that** the binder combination comprises the following components:
A) 20 to 70 wt.% of the binder of one or more amorphous polyester resins containing carboxyl groups and having an arithmetically averaged acid number of 50 to 100 mg KOH/g,
B) 20 to 50 wt.% of the binder of one or more polymers containing epoxide groups and based on bisphenol A and phenol novolac, the phenol novolac-modified epoxy resins preferably having an arithmetically averaged epoxy equivalent weight of 350 to 650 g/eq, preferably 400 to 650 g/eq,
C) 5 to 30 wt.% of the binder of one or more crystalline or semicrystalline polyester resins containing carboxyl groups and having an arithmetically averaged acid number of 15 to 80 mg KOH/g,
D) 0.5 to 4 wt.% (based on the total formulation) of one or more catalysts (accelerators) for the cross-linking reaction(s) and optionally
E) 0 to 10 wt.% (based on the total formulation) of one or more components having reactive groups for cross-linking reaction(s) with the carboxyl groups and/or epoxide groups of components A), B) and C).

3. Powder coating composition according to either claim 1 or claim 2, **characterised in that** the (semi)crystalline polyesters (component C) contain succinic acid and/or the anhydrides and/or derivatives thereof as a polycarboxylic acid.

4. Powder coating composition according to claim 3, **characterised in that** 1,4-butanediol is contained as a polyol in component C.

5. Powder coating according to the preceding claims, **characterised in that** over 50 mol.%, preferably over 75 mol.%, and particularly preferably over 90 mol.%, of 1,4-butanediol is used as the polyol of component C and over 50 mol.%, preferably over 75 mol.%, and particularly preferably over 90 mol.%, of succinic acid and/or the anhydrides thereof and/or derivatives thereof is used as the polycarboxylic acid.

6. Powder coating composition according to any of claims 1 to 5, **characterised in that** the (semi)crystalline polyesters (component C) have a melting temperature or a melting range of 60 to 130°C and a viscosity of 0.1 to 2 Pa*s at 130°C measured in the Cone & Plate method (Brookfield CAP 2000+).

7. Powder coating composition according to any of claims 1 to 6, **characterised in that** 30 to 100 wt.% of component B consists of a hydrogenated epoxy resin.

8. Powder coating composition according to any of claims 1 to 7, **characterised in that** polyamine compounds and/or polyamine adducts are contained as component E).

9. Powder coating composition according to any of claims 1 to 8, **characterised in that** 0.3 to 2.0 wt.% (based on the total formulation) of 2-phenyl-2-imidazoline is contained as the catalyst (component D).

10. Powder coating composition according to any of claims 1 to 9, **characterised in that** 0.1 to 1.0 wt.% (based on the total formulation) of phosphonium salts and/or ammonium salts, particularly preferably but not exclusively ethyl triphenyl phosphonium bromide, are contained as the catalysts (component D).

11. Powder coating composition according to any of claims 1 to 10, **characterised in that** 0.1 to 3.0 wt.% (based on the total formulation) of imidazoles are contained as the catalysts (component D).

12. Powder coating composition according to any of claims 1 to 11, **characterised in that** they are prepared as single-component or two-component powder coatings.

13. Powder coating composition according to any of claims 1 to 12, **characterised in that** an at least 80 µm thick coating of a 19 mm thick MDF board withstands the water swell test in line with the IKEA test standard IOS-TM-0022 for more than 12 hours without cracks, preferably for 24 hours without cracks.

14. Method for preparing a powder coating composition according to any of claims 1 to 13, **characterised in that** the component C) and/or component D), in one of the binders or a combination of binders, and optionally other powder coating components, is pre-distributed by extrusion, the extruded product then being used as a raw material for preparing the powder coating.

15. Use of a powder coating composition according to any of claims 1 to 13 for coating substrates, in particular for coating temperature-sensitive substrates made of plastics materials and wood materials, such as LDF, MDF, HDF, chipboard, OSB, BOF (board of frame), plywood, thermowood, solid wood and WPC), as a single-layer topcoat or after previous coating with a basecoat.

16. Use of a powder coating composition according to any of claims 1 to 13 for coating substrates and subsequently overcoating with a powder coating and/or liquid paint and/or other coating agents such as toner and inks.

17. Use of a powder coating composition according to any of claims 1 to 13 for coating wood or wood-based substrates such as LDF, MDF, HDF, chipboard, OSB, BOF (board of frame), plywood, thermowood, solid wood and WPC.

## Revendications

1. Compositions de laque en poudre contenant une combinaison de liants, **caractérisées en ce que** la combinaison de liants comprend les composants suivants :
A) 20 à 70 % en poids des liants d'une ou de plusieurs résines de polyester amorphes, contenant des groupes carboxyle, ayant un indice d'acide en moyenne arithmétique de 50 à 100 mg de KOH/g,
B) 20 à 50 % en poids des liants d'un ou de plusieurs polymères contenant des groupes époxyde ayant un poids équivalent en époxyde en moyenne arithmétique de 350 à 650 g/équivalent, de préférence de 400 à 650 g/équivalent,
C) 5 à 30 % en poids des liants d'une ou de plusieurs résines de polyester cristallines ou semi-cristallines, contenant des groupes carboxyle, ayant un indice d'acide en moyenne arithmétique de 15 à 80 mg de KOH/g,
D) 0,5 à 4 % en poids (sur la formulation totale) d'un ou de plusieurs catalyseurs (accélérateurs) pour la ou les réactions de réticulation et le cas échéant
E) 0 à 10 % en poids (sur la formulation totale) d'un ou de plusieurs composants ayant des groupes réactifs pour la ou les réactions de réticulation avec les groupes carboxyle et/ou les groupes époxyde des composants A), B) et C),
dans lesquelles la viscosité à l'état fondu de la laque en poudre mesurée par géométrie de mesure plan-plan à un taux de chauffe de 5°C/min présente un minimum dans la plage de 300 à 2000 Pa*s.

2. Composition de laque en poudre selon la revendication 1, **caractérisée en ce que** la combinaison de liants comprend les composants suivants :
A) 20 à 70 % en poids des liants d'une ou de plusieurs résines de polyester amorphes, contenant des groupes carboxyle, ayant un indice d'acide en moyenne arithmétique de 50 à 100 mg de KOH/g,
B) 20 à 50 % en poids des liants d'un ou de plusieurs polymères contenant des groupes époxyde à base de bisphénol A et de novolaque phénolique, les résines d'époxyde modifié par la novolaque phénolique ayant un poids équivalent en époxyde en moyenne arithmétique de 350 à 650 g/équivalent, de préférence de 400 à 650 g/équivalent,
C) 5 à 30 % en poids des liants d'une ou de plusieurs résines de polyester cristallines ou semi-cristallines, contenant des groupes carboxyle, ayant un indice d'acide en moyenne arithmétique de 15 à 80 mg de KOH/g,
D) 0,5 à 4 % en poids (sur la formulation totale) d'un ou de plusieurs catalyseurs (accélérateurs) pour la ou les réactions de réticulation et le cas échéant
E) 0 à 10 % en poids (sur la formulation totale) d'un ou de plusieurs composants ayant des groupes réactifs pour la ou les réactions de réticulation avec les groupes carboxyle et/ou les groupes époxyde des composants A), B) et C).

3. Composition de laque en poudre selon la revendication 1 ou 2, **caractérisée en ce que** les polyesters (semi-)cristallins (composant C) contiennent de l'acide succinique et/ou des anhydrides et/ou dérivés de celui-ci à titre d'acide polycarboxylique.

4. Composition de laque en poudre selon la revendication 3, **caractérisée en ce que** du 1,4-butanediol est présent à titre de polyol pour le composant C.

5. Laque en poudre selon les revendications précédentes, **caractérisée en ce que** plus de 50 % en moles, de préférence plus de 75 % en moles et de manière particulièrement préférée plus de 90 % en moles de 1,4-butanediol sont mis en oeuvre à titre de polyol du composant C et **en ce que** plus de 50 % en moles, de préférence plus de 75 % en moles et de manière particulièrement préférée plus de 90 % en moles d'acide succinique et/ou d'anhydrides et/ou de dérivés de celui-ci sont mis en oeuvre à titre d'acide polycarboxylique.

6. Composition de laque en poudre selon l'une des revendications 1 à 5, **caractérisée en ce que** les polyesters (semi-) cristallins (composant C) présentent une température de fusion et/ou une plage de fusion de 60 à 130°C et une viscosité de 0,1 à 2 Pa*s à 130°C, mesurée dans le procédé cône et plan (Brookfield CAP 2000+).

7. Composition de laque en poudre selon l'une des revendications 1 à 6, **caractérisée en ce que** 30 à 100 % en poids du composant B se compose d'une résine d'époxyde hydrogénée.

8. Composition de laque en poudre selon l'une des revendications 1 à 7, **caractérisée en ce que** des composés de polyamine et/ou des produits d'addition de polyamine sont présents à titre de composant E).

9. Composition de laque en poudre selon l'une des revendications 1 à 8, **caractérisée en ce que** 0,3 à 2,0 % en poids (sur la formulation totale) de 2-phényl-2-imidazoline sont présents à titre de catalyseur (composant D).

10. Composition de laque en poudre selon l'une des revendications 1 à 9, **caractérisée en ce que** 0,1 à 1,0 % en poids (sur la formulation totale) de sels de phosphonium et/ou de sels d'ammonium, notamment de préférence, mais pas exclusivement, de bromure d'éthyltriphénylphosphonium, est présent à titre de catalyseur (composant D).

11. Composition de laque en poudre selon l'une des revendications 1 à 10, **caractérisée en ce que** 0,1 à 3,0 % en poids (sur la formulation totale) d'imidazoles sont présents à titre de catalyseurs (composant D)

12. Composition de laque en poudre selon l'une des revendications 1 à 11, **caractérisée en ce qu'**elle est produite sous forme de laque en poudre monocomposant ou bicomposant.

13. Composition de laque en poudre selon l'une des revendications 1 à 12, **caractérisée en ce que** le test de gonflement à l'eau en s'inspirant de la norme de contrôle IKEA IOS-TM-0022 est réussi sans fissures pendant plus de 12 heures, de préférence pendant 24 heures, pour un revêtement d'au moins 80 µm d'épaisseur de plaque de MDF de 19 mm d'épaisseur.

14. Procédé de production d'une composition de laque en poudre selon l'une des revendications 1 à 13, **caractérisé en ce que** le composant C) et/ou le composant D), dans l'un des liants ou une combinaison de liants, ainsi que le cas échéant d'autres composants de laque en poudre, est pré-distribué par extrusion, le produit extrudé étant mis en oeuvre par la suite à titre de matière première pour la production de laque en poudre.

15. Utilisation d'une composition de laque en poudre selon l'une des revendications 1 à 13 pour le revêtement de substrats, en particulier pour le revêtement de substrats thermosensibles en matières plastiques et en matériaux de bois, comme par exemple les panneaux LDF, MDF, HDF, de copeaux de bois, OSB, BOF (Board of Frame), de contreplaqué, de bois thermotraité, de bois massif et de composites bois-polymère, à titre de laque de recouvrement monocouche ou après revêtement préalable avec un laquage de base.

16. Utilisation d'une composition de laque en poudre selon l'une des revendications 1 à 13 pour le revêtement de substrats et le sur-revêtement consécutif avec une laque en poudre et/ou une laque liquide et/ou un autre agent de revêtement tel que le toner et les encres.

17. Utilisation d'une composition de laque en poudre selon l'une des revendications 1 à 13 pour le revêtement de substrats à base de bois comme les panneaux LDF, MDF, HDF, de copeaux de bois, OSB, BOF (Board of Frame), de contreplaqué, de bois thermotraité, de bois massif et de composites bois-polymère.
